# EUROPÄISCHE PATENTSCHRIFT

(11) **EP 1 403 576 B1**
(45) Veröffentlichungstag und Bekanntmachung des Hinweises auf die Patenterteilung: **29.03.2006**
(21) Anmeldenummer: 03405658.0
(22) Anmeldetag: 09.09.2003
(51) Int. Cl.: F16K 31/122, F16K 3/02

(54) **Explosionsschutz-Absperrvorrichtung für eine Rohrleitung**
Pipe closure device for explosion protection
Dispositif de fermeture d'une conduite pour la prevention contre l'explosion

(30) Priorität: 25.09.2002 CH 16122002
(43) Veröffentlichungstag der Anmeldung: 31.03.2004
(73) Patentinhaber: Sistag Absperrtechnik, 6274 Eschenbach (CH)
(72) Erfinder: Sidler, Hans Jörg, 6274 Eschenbach (CH)
(74) Vertreter: Luchs, Willi

(56) Entgegenhaltungen:
- DE-A- 19 821 756
- DE-C- 3 617 522
- FR-A- 2 127 281
- US-A- 4 135 547
- US-A- 4 279 402

## Beschreibung

Die Erfindung betrifft eine Explosionsschutz-Absperrvorrichtung für eine Rohrleitung gemäss dem Oberbegriff des Anspruches 1.

Eine Explosionsschutz-Abspcrrvorrichtung dieser Art ist beispielsweise aus der DE-A-198 21 756 bekannt. In dieser Druckschrift ist eine Schieberplatte zum raschen Verschliessen von Rohrleitungen offenbart, die über eine Kolbenstange mit einem in einem Zylinder verschiebbar geführten und von einem Druckmittel beaufschlagbaren Kolben verbunden ist. Das Druckmittel ist von einem externen Druckbehälter tiber ein Schliessventil in eine Arbeitskammer des Zylinders zuführbar. Beim Ausbreiten einer in der Rohrleitung detektierten Flamme oder einer plötzlich festgestellten Druckerhöhung wird das Schliessventil geöffnet, der Kolben beaufschlagt und die quer zur Durchflussrichtung verstellbare Schieberplatte innerhalb kürzester Zeit in die Schliessstellung gebracht, wodurch eine Flammenausbreitung und damit eine Explosion verhindert werden kann. Derartige Explosionsschutz-Absperrvorrichtungen finden insbesondere in Chemic- oder Lebensmittelindustrie-Anlagen, oder aber auch in Bergwerken, oder Zement-, Textil- oder Holzverarbeitungsanlagen Verwendung, bei denen zum Beispiel Staubexplosionen infolge eines Funkens, einer Reibung, einer Anlagenberhitzung etc. auftreten können. Sie haben in der Regel den Nachteil, dass sie relativ viel Raum in Anspruch nehmen und in ihrem Aufbau und Montage kompliziert sind.

Im Dokument US-A-4, 135, 547 ist ein Ventilverschluss beschrieben, bei welchem eine mit einer Schieberplatte kuppelbare Kolbenstange in einem inneren Zylinder längsgeführt ist und darin zwei Kammern enthalten sind. Dieser Zylinder ist seinerseits in einem diesen umgebenden Gehäuse gehalten. Zwischen dem Gehäuse und dem Zylinder ist eine Speicherkammer gebildet. Beim Betrieb dieses Ventilverschlusses wird eine Druckflüssigkeit durch den Einlass und durch das Ventil in diese Kammer eingefüllt, wobei diese Kammer via den Durchlass stets mit der Kammer verbunden ist. Wenn der Verschluss geschlossen werden soll, wird der Anschluss beim Ventil ausgeschaltet, so dass in der Kammer der Druck abfällt und die Kolbenstange nach oben geschoben wird. Es besteht ausscrdcm ein weiterer Nachteil darin, dass sowohl die ringförmige Kammer wie auch die Kammer den Kolben nur über einen begrenzten Ringdurchmesser, nicht aber über seinen vollen Querschnitt beaufschlagt.

Die Druckschrift FR-2.127.281 beschreibt eine Ventilanordnung, bei der ebenfalls ein innerer Zylinder und eine diesen umgebende Speicherkammer vorgesehen ist. Bei Schliessung eines Ventils wird ein vorgesehener Differentialkolben in eine Position verschoben, bei der die in die Speicherkammer eingespiesene Flüssigkeit durch entsprechende Öffnungen vorerst in eine den Differentialkolben umgebende Kammer und von dieser zurück in die den Kolben beaufschlagende Kammer geleitet. Bei dieser Ventilanordnung besteht ebenfalls ein Nachteil darin, dass die Flüssigkeit beim Überleiten von der Speicherkammer in die andere Kammer nur in einer kleinen Menge erfolgen kann, womit ebenfalls eine schnelle Verschiebung des Kolbens nicht geboten, ist.

Der vorliegenden Erfindung liegt die Aufgabe zugrunde, eine montagetechnisch einfache und platzsparende Explosionsschutz-Absperrvorrichtung der eingangs genannten Art zu schaffen, mit der eine möglichst kurze Schlicsszeit erreicht werden kann.

Diese Aufgabe wird erfindungsgemäss durch eine Explosionsschutz-Abspexrvorrichtung mit den Merkmalen des Anspruches 1 gelöst.

Weitere bevorzugte Ausgestaltungen der erfindungsgemässen Explosionsschutz-Absperrvorrichtung bilden den Gegenstand der abhängigen Ansprüche.

Dadurch, dass der Zylinder innerhalb einer von einem Gehäuse umschlossenen Druckkammer angeordnet ist, die den Druckmittelbehälter bildet, entfällt die Notwendigkeit eines externen, viel Raum einnehmenden Druckmittelbehälters, und es wird eine kompakte, platzsparende Absperrvorrichtung geschaffen. Zudem ist der Verbindungsweg zwischen der Druckkammer und der Arbeitskammer kurz, wodurch eine sehr kurze Schliesszeit erreicht werden kann.

Die Erfindung wird nachfolgend anhand der Zeichnung näher erläutert. Es Zeigen:
- Fig. 1: ein Ausführungsbeispiel der erfindungsgemässen Explosionsschutz-Absperrvorrichtung in Frontansicht und teilweise im Schnitt; und
- Fig. 2: die Absperrvorrichtung nach Fig. 1 im Längsschnitt.

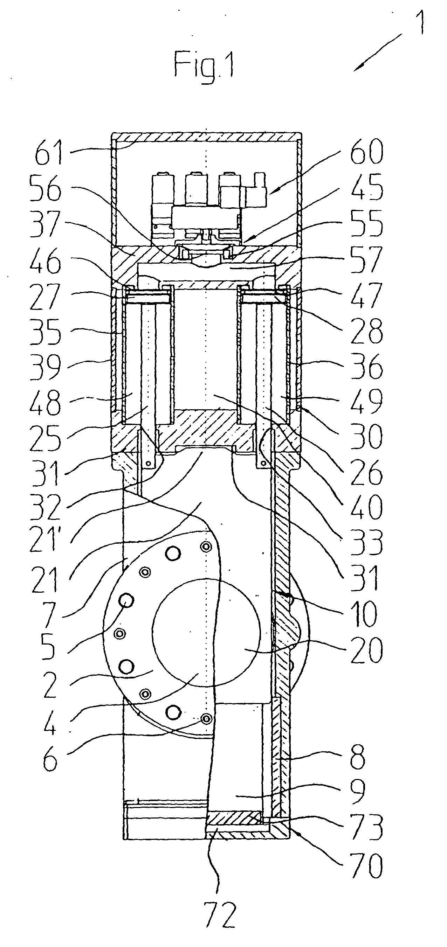

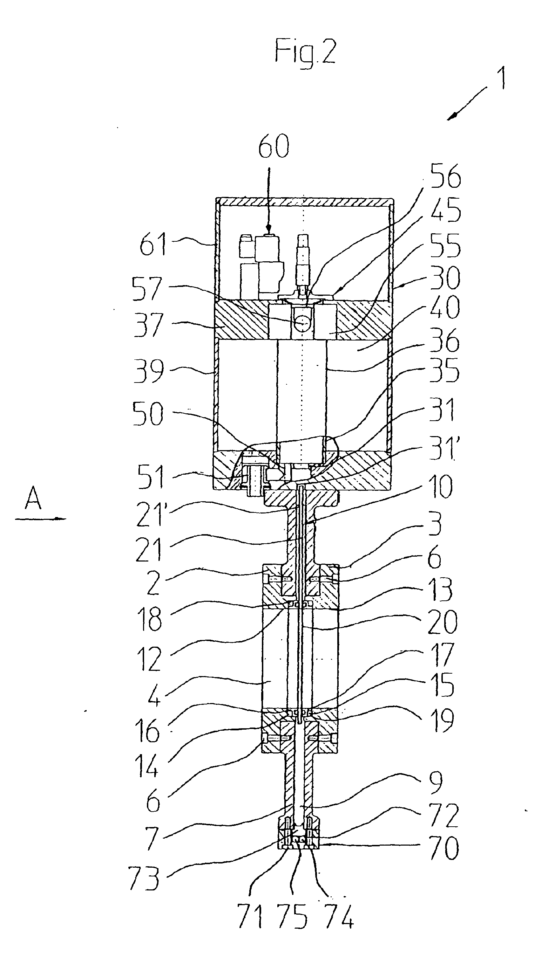

In Fig. 1 und 2 ist eine Absperrvorrichtung 1 zum raschen Verschliessen einer Rohrleitung dargestellt. Die Rohrleitung, in welche die Absperrvorrichtung 1 quer zur Durchflussrichtung A nach Fig. 2 eingebaut ist, ist selber aus der Zeichnung nicht ersichtlich. Die erfindungsgemässe Absperrvorrichtung 1 ermöglicht einen einfachen Flanschanschluss der Rohrleitung an zwei einen Rohrdurchlass 4 bildende Flanschenteile 2, 3 (Fig. 2), die zu diesem Zweck stirnseitig mit einer Anzahl von Schraubenlöchern 5 (Fig. 1) zum Anschrauben der Rohrleitungsflanschen versehen sind. Die Flanschenteile 2, 3 sind an einem Schiebergehäuse 7 mittels Schrauben 6 verschraubt. Im Schiebergehäuse 7 ist ein Spalt 9 vorgesehen, in welchem eine Schieberplatte 10 quer zur Durchflussrichtung A verschiebbar angeordnet ist.

Die beiden Flanschenteile 2, 3 weisen gemäss Fig. 2 Durchgangsöffnungen 12, 13 auf, die in ihrem einander zugewandten Bereich im Durchmesser erweitert sind. In diesem im Durchmesser erweiterten Bereich der Durchgangsöffnungen 12, 13 sind ringförmige Dichtungselemente 14, 15 mit je einem stirnseitig eingesetzten Dichtungsring 16, 17 angeordnet. Die beiden Dichtungsringe 16, 17 liegen dichtend an der Schieberplatte 10 an und bilden gleichzeitig eine Führung für die verschiebbare Schieberplatte 10. Sie bestehen deshalb aus einem gute Gleiteigenschaften aufweisenden Material, damit die bei der Verschiebung der Schieberplatte 10 entstehende und sich negativ auf die Schliesszeit auswirkende Reibung möglichst klein ist. Die Befestigung der Dichtungselemente 14, 15 im erweiterten Teil der Durchgangsöffnungen 12, 13 kann beispielsweise mittels am Umfang der Dichtungselemente 14, 15 angeordneter Trägerringe 18, 19 erfolgen.

Die Schieberplatte 10 ist beim dargestellten Ausführungsbeispiel als eine sogenannte Lochschieberplatte ausgestaltet, die eine den Rohrdurchlass 4 freigebende Durchgangsöffnung 20 aufweist. Der den Rohrdurchlass 4 bei der Verschiebung der Schieberplatte 10 verschliessende Teil der Schieberplatte 10 ist mit 21 bezeichnet. In diesem Bereich ist die Schieberplatte 10 seitlich an je eine Kolbenstange 25, 26 gekoppelt (Fig. 1). Die mit je einem Kolben 27, 28 verbundenen Kolbenstangen 25, 26 sind durch eine Stirnwand 31 eines Gehäuses 30 verschiebbar geführt (die Führungsöffnungen sind in Fig. 1 mit 32, 33 bezeichnet), welches mit dem Schiebergehäuse 7 fest verbunden ist. Die beiden Kolben 27, 28 sind in je einem Zylinder 35, 36 verschiebbar geführt, die sich zwischen der bereits erwähnten Stirnwand 31 und einer dieser gegenüberliegenden, anderen Stirnwand 37 des Gehäuses 30 erstrecken. Das Gehäuse 30 weist ferner einen die beiden Stirnwände 31, 37 verbindenden Mantel 39 auf, der eine die beiden Zylinder 35, 36 aufnehmende Druckkammer 40 umschliesst. Die Druckkammer 40 bildet erfindungsgemäss einen Behälter für ein Druckmittel, vorzugsweise Luft (oder ein anderes Gas), welches in nicht näher dargestellten Weise von einer Druckquelle mit einem industriell üblichen Netzdruck geliefert wird, und das zur Kolbenbeaufschlagung und damit verbundenen Verschiebung der Schieberplatte 10 in eine den Rohrdurchlass 4 verschliessende Stellung vorgesehen ist.

Für die Kolbenbeaufschlagung wird das Druckmittel von der Druckkammer 40 über ein Schliessventil 45 jeweils in eine Arbeitskammer 46, 47 der beiden Zylinder 35, 36 eingeleitet, die zwischen den Kolben 27, 28 und der den Zylinderkopf bildenden Stirnwand 37 des Gehäuses 30 gebildet sind. Eine zur anderen Seite des jeweiligen Kolbens 27, 28 vorhandene Verdrängungskammer 48, 49 wird über je eine in der schieberplattenseitigen Stirnwand 31 im Bereich des jeweiligen Zylinders 35, 36 angeordnete Auslassöffnung 50 mit einem Schnellentlüftungsventil 51 verbunden (aus der Zeichnung ist nur eine dieser Auslassöffnungen 50 mit einem Entlüftungsventil 51 ersichtlich, vgl. Fig. 2).

Das Schliessventil 45 ist in der den Zylinderkopf bildenden Stirnwand 37 eingebaut, die auch eine Druckkammer-Ausgangsöffnung 55 aufweist. Ferner ist in der Stirnwand 37 ein von einem Ventilteller 56 des Schliessventils 45 verschliessbarer, sich verzweigender und zu den Arbeitskammern 46, 47 der beiden Zylinder 35, 36 führender Verbindungskanal 57 angefertigt. Die Druckkammer-Ausgangsöffnung 55 ist durch Öffnen des Schliessventils 45 mit dem Verbindungskanal 57 verbindbar. Der Aufbau und Steuerung des Schliessventils 45 entspricht im wesentlichen der aus DE-A-198 21 756 bekannten Ausführung und wird daher nicht näher beschrieben. Vorhandene Steuerelemente 60 zur Steuerung der Kolben- bzw. Schieberplattenbewegung sowie ein Teil des Schliessventils 45 sind ausserhalb des Gehäuses 30 an der Stirnwand 37 angeordnet und durch eine auf das Gehäuse 30 aufsetzbare Kappe 61 gekapselt, wodurch Staubablagerungen an diesen Steuerelementen 60 und damit verbundene allfällige Explosionsgefahr vermieden werden.

Am Schiebergehäuse 7 ist an seinem dem Gehäuse 30 abgewandten Ende ein Endstück 70 befestigt (die Schrauben sind in Fig. 2 mit 71 bezeichnet), welches eine an den Spalt 9 im Gehäuse 7 anschliessende Ausnehmung 72 aufweist, in welcher eine sich über die Schieberplatten-Breite erstreckende Stossleiste 73 in Verschieberichtung der Schieberplatte 10 beweglich geführt ist. Zwischen der Stossleiste 73 und dem Endstück 70 sind vorzugsweise zwei oder mehrere Elastomer-Teile 74, beispielsweise Silikon-Schnüre, lose mit vorhandenen Zwischenräumen 75 hineingelegt. Die Stossleiste 73 ist hierbei widerstandsfähig beim Aufprall der in die Schliessstellung gebrachten Schieberplatte 10 ausgebildet, wobei die eine gute Kompressibilität aufweisenden Elastomer-Teile 74 sowie die eine Ausweichmöglichkeit bietenden Zwischenräume 75 für optimale Aufpralldämmung sorgen. Die Schieberplatte 10 bedarf im Aufschlagbereich keiner Erweiterung, die nachteiligerweise eine Massenvergrösserung bedeuten würde. Ein allfälliger Ersatz der Elastomer-Teile 74, die den Vorteil einer mehrmaligen Verwendung bieten, ist äusserst einfach. Zudem sind die Elastomer-Teile 74 als ein Fertigprodukt erhältlich.

Durch die erfindungsgemässe Anordnung der Zylinder 35, 36 in einer von einem Gehäuse 30 umschlossenen Druckkammer 40, die den Druckmittelbehälter bildet, wird eine kompakte, platzsparende Absperrrvorrichtung geschaffen, die montagetechnisch einfach und wirtschaftlich ist. Zudem wird durch die unmittelbare Anordnung der Druckkammer-Ausgangsöffnung 55 beim zur Arbeitskammer 46, 47 führenden Verbindungskanal 57 eine besonders kurze Schliesszeit erreicht.

Es wäre selbstverständlich durchaus denkbar, anstelle zwei nebeneinander angeordneten Kolben/Zylinder-Einheiten eine einzige, mit der Schieberplatte 10 zusammenwirkende Kolben/Zylinder-Einheit in der den Druckmittelbehälter bildenden Druckkammer 40 zu unterbringen, wodurch der Verbindungsweg Druckkammer/Arbeitskammer noch kürzer sein könnte, da die Verzweigung des Verbindungskanals 57 wegfallen würde und dieser direkt in die einzige Arbeitskammer münden könnte. Die Verwendung von zwei Kolben/Zylinder-Einheiten mit zwei seitlich an der Schieberplatte 10 angebrachten Kolbenstangen 25, 26 ist jedoch gerade bei der Verwendung einer Lochschieberplatte von Vorteil, da der bezüglich der Schliessrichtung hinterste Bereich 21' des zum Verschliessen des Rohrdurchlasses 4 vorgesehenen Teiles 21 gegenüber dem Befestigungspunkt der Kolbenstangen 25, 26 zurückversetzt sein und im mittleren Breitenbereich sogar in eine Ausnehmung 31' in der schieberplattenseitigen Stirnwand 31 des Gehäuses 30 hineinragen kann, wodurch die Gesamtlänge der Absperrvorrichtung 1 reduziert und die Schliesszeit zusätzlich verkürzt wird. Zudem braucht bei zwei kleineren Kolben eine kleinere Masse in Bewegung versetzt werden, und die Kräfteübertragung auf die Schieberplatte 10 ist vorteilhafter.

Die Schieberplatte 10 im Schiebergehäuse 7 ist durch die in den Flanschenteilen 2, 3 eingesetzten Dichtungsringen 16, 17 und ausserdem durch seitliche Kunststoff- oder beschichtete Metall-Führungen 8 oder dergleichen im unteren Teil des Schiebergehäuses geführt. Mit diesen Führungen können die Reibungskräfte der Schieberplatte klein gehalten werden, was ein schnelleres Zuschliessen des Rohrdurchlasses 4 ermöglicht. Die Dichtungsringe 16, 17 in den an das Schiebergehäuse 7 anschraubbaren Flanschenteilen 2, 3 können ausserdem bei Bedarf problemlos ausgewechselt werden, ohne dass das Schiebergehäuse 7 demontiert werden muss.

Die Erfindung ist mit dem einen Ausführungsbeispiel ausreichend dargetan. Es könnte selbstverständlich noch anders ausgestaltet sein. So könnten zum Beispiel anstelle eines Schliessventiles 45 auch zwei oder gar mehrere vorhanden sein, die entsprechend nebeneinander angeordnet wären.

## Patentansprüche

1. Explosionsschutz-Absperrvorrichtung für eine Rohrleitung, mit einer quer zur Durchflusarichtung (A) verschiebbaren Schieberplatte (10), die über eine Kolbenstange (25, 26) mit einem in wenigstens einem Zylinder (35, 36) verschiebbar geführten, von einem Druckmittel beaufschlagbaren Kolben (27, 28) verbunden ist, wobei das Druckmittel von einem Druckmittelbehälter über wenigstens ein Schlicssventil (45) in eine Arbeitskammer (46, 47) des jeweiligen Zylinders (35, 36) zuführbar und dabei die Schieberplatte (10) durch die Kolbenbcaufschlagung in eine einen Rohrdurchlass (4) verschliessende Stellung bringbar ist, wobei der wenigstens eine Zylinder (35, 36) innerhalb einer von einem Gehäuse (30) umschlossenen Druckkammer (40) angeordnet ist, die den Druckmittelbehälter bildet, **dadurch gekennzeichnet, dass**
das Gehäuse (30) eine die Druckkammer (40) stirnseitig begrenzende Stirnwand (37) aufweist, die einen die Arbeitskammer (46, 47) des Zylinders (35, 36) begrenzenden Zylinderkopf bildet, und dic Stirnwand (37) einerseits einen von einem Ventilteller (56) eines vorgesehenen Schliessventils (45) verschliessbaren, zur Arbeitskammer (46, 47) des jeweiligen Zylinders (35, 36) führenden Verbindungskanal (57) und anderseits eine durch Öffnen des Schliessventils (45) mit dem Verbindungskanal (57) verbindbare Druckkammer-Ausgangsöffnung (55) aufweist, wobei diese Ausgangsöffnung (55) den Verbindungskanal (57) umgebend in die Druckkammer (40) führt.

2. Explosionsschutz-Absperrvorrichtung nach Anspruch 1, **dadurch gekennzeichnet, dass** das Schliessventil (45) in dieser Stirnwand (37) eingebaut ist.

3. Explosionsschutz-Absperrvorrichtung nach Anspruch 2, **dadurch gekennzeichnet, dass** die mit der Schieberplatte (10) gekoppelte Kolbenstange (25, 26) durch eine Stirnwand (31) des Gehäuses (30) verschiebbar geführt ist, wobei die Schieberplatte (10) in einem Spalt (9) eines mit dem Gehäuse (30) fest verbundenen Schiebergehäuses (7) verschiebbar angeordnet ist.

4. Explosionssehutz-Abspemorrichtung nach Anspruch 3; **dadurch gekennzeichnet, dass** die schieberplattenseitige Stirnwand (31) des Gehäuses (30) im Bereich des Zylinders (35, 36) eine Auslassöffnung (50) aufwcist, die eine Verdrängungskammer (48, 49) des Zylinders (35, 36) mit einem ebenfalls in der Stirnwand (31) eingebauten Schnellentluftungsventil. (51) verbindet.

5. Explosionsschutz-Absperrvortichtung nach einem der Ansprüche 2 bis 4, **dadurch gekennzeichnet, dass** in der Druckkammer (40) zwei zueinander parallele Zylinder (35, 36) vorhanden sind und die Schieberplatte (10) in ihren seitlichen Bereichen mit je einer Kolbenstange (25, 26) dieser Zylinder gekoppelt ist, wobei in deren Arbeitskammer (46, 47) das Druckmittel über ein gemeinsames Schliessventil (45) und einen sich verzweigenden Verbindungskanal (57) zuführbar ist.

6. Explosionsschutz-Absperrvorrichtung nach einem der Ansprüche 1 bis 5, **dadurch gekennzeichnet, dass** die Schieberplatte (10) als eine Lochschieberplatte ausgebildet ist, die eine freigebende Durchgangsöffnung (20) sowie einen verschliessenden Teil (21) aufweist.

7. Explosionsschutz-Absperrvorrichtung nach Anspruch 6, **dadurch gekennzeichnet, dass** an das Schiebergehäuse (7) je ein Flanschteil (2, 3) befestigt ist, deren Durchgangsöffnungen (12, 13) zusammen mit der Durchgangsöffnung (20) der Schieberplatte (10) den Rohrdurchlass (4) bilden, wobei in den Flanschenteilen (2, 3) stirnseitig jeweils ein ringförmiges Dichtungselement (14, 15) eingesetzt ist, der jeweils einen die Durchgangsöffnung (12, 13) umgebenden, eine Führung für die Schieberplatte (10) bildenden Dichtungsring (16, 17) aufweist, welcher aus einem gute Gleiteigenschaften aufweisenden Material versehen ist.

8. Explosionsschutz-Absperrvorrichtung nach einem der Ansprüche 3 bis 7, **dadurch gekennzeichnet, dass** im Schiebergehäuse (7) endseitig eine sich über die Schieberplatten-Breite erstreckende Stossleiste (73) in Verschieberichtung der Schieberplatte (10) beweglich geführt ist, wobei zwischen der Stossleiste (73) und dem Endstück (70) vorzugsweise wenigstens ein Elastomer-Teil (74) lose mit vorhandenen Zwischenräumen (75) hineingelegt ist.

9. Explosionsschutz-Absperrvorrichtung nach einem der Ansprüche 2 bis 8, **dadurch gekennzeichnet, dass** ein Teil des Schliessventils (45) sowie weitere Steuerelemente (60) zur Steuerung der Kolben- bzw. Schieberplattenbewegung ausserhalb des Gehäuses (30) an der den Zylinderkopf bildenden Stirnwand (37) angeordnet und durch eine auf das Gehäuse (30) aufsetzbare Kappe (61) gekapselt sind.

## Claims

1. Shut-off device for protection against explosion in a pipe-line, with a slide valve plate (10) slidable transversely to the direction of flow (A), connected via a piston rod (25, 26) to a piston (27, 28) actuated by a pressure medium and slidable in at least one cylinder (35, 36), whereby the pressure medium can be delivered from a pressure medium reservoir via at least one closing valve (45) into a working chamber (46, 47) of the respective cylinder (35, 36), at the same time moving the slide valve plate (10) by piston actuation into a position closing a pipe passage (4), whereby the at least one cylinder (35, 36) is arranged within a pressure chamber (40) enclosed by a housing (30), which forms the pressure medium reservoir, **characterised in that**
the housing (30) has an end wall (37) delimiting at the end face of the pressure chamber (40), which forms a cylinder head delimiting the working chamber (46, 47) of the cylinder (35, 36), and the end wall (37) on the one hand has a connecting duct (57), closable by a valve disk (56) of the closing valve (45) and leading to the working chamber (46, 47) of the respective cylinder (35, 36), and on the other hand has a pressure chamber exit port (55), which is connectable with the connecting duct (57) by opening the closing valve (45), whereas this exit port (55) surrounding the connecting duct (57) is leading into the pressure chamber (49).

2. Shut-off device according to claim 1, **characterised in that** the closing valve (45) is implemented in this end wall (37).

3. Shut-off device according to claim 2, **characterised in that** the piston rod (25, 26) connected with the slide valve plate (10) is slidable guided by an end wall (31) of the housing (30), whereby the slide valve plate (10) is arranged in a gap (9) of a slide valve housing (7) firmly connected to the housing (30).

4. Shut-off device according to claim 3, **characterised in that** the end wall (31) of the housing (30) at the valve plate side in the area of the cylinder (35, 36) has an outlet port (50), which connects the displacement chamber (48, 49) of the cylinder (35, 36) to a quick-venting valve (51) which is also implemented in the end wall (31).

5. Shut-off device according to one of the claims 2 to 4, **characterised in that** two cylinders (35, 36) arranged parallel to each other are located in the pressure chamber (40) and the slide valve plate (10) is coupled in its side areas to each piston rod (25, 26) of these cylinders, whereby the pressure medium is supplied to their working chamber (46, 47) via a common closing valve (45) and a branched connecting duct (57).

6. Shut-off device according to one of the claims 1 to 5, **characterised in that** the slide valve plate (10) is designed as a hole-slide valve plate with a passage opening aperture (20) and a shutting off part (21).

7. Shut-off device according to claim 6, **characterised in that** each flange part (2, 3) is attached to the slide valve housing (7), the through passages (12, 13) of which form together with the pass opening (20) in the slide valve plate (10) the pipe passage (4), whereby an annular sealing element (14, 15) is fitted in the end face of each flange part (2, 3), each having a sealing ring (16, 17) surrounding the through passage (12, 13) forming a guide for the slide valve plate (10), the said ring being provided with a material which has good sliding properties.

8. Shut-off device according to one of the claims 3 to 7, **characterised in that** a protection strip (73) extending beyond the width of the slide valve plate is movably guided at the end in the slide valve housing (7) in the direction in which the slide valve plate (10) is shifted, whereby preferably at least one elastomer part (74) with the existing spaces (75) is loosely placed between the protection strip (73) and the end piece (70).

9. Shut-off device according to one of the claims 2 to 8, **characterised in that** a part of the closing valve (45) and further control elements (60) for controlling the movement of the piston respectively of the slide valve plate are arranged outside the housing (30) at the end wall (37) forming the cylinder head and are encapsulated by a cap (61) which can be placed over the housing (30).

## Revendications

1. Dispositif d'obturation d'une conduite pour se protéger d'une explosion, comprenant une plaque (10) formant tiroir qui peut coulisser transversalement à la direction (A) de passage et qui est reliée par une tige (25, 26) de fond à un piston (27, 28) guidé à coulissement dans au moins un cylindre (35, 36) et alimenté en un fluide sous pression, le fluide sous pression pouvant être envoyé d'un récipient de fluide sous pression à une chambre (46, 47) de travail du cylindre (35, 36) respectif, en passant par au moins une vanne (45) de fermeture, et la plaque (10) formant tiroir pouvant ainsi être mise par l'alimentation du piston dans une position fermant un passage (4) de la conduite, le au moins un cylindre (35, 36) étant disposé à l'intérieur d'une chambre (40) sous pression fermée par une enveloppe (30) qui forme le récipient de fluide sous pression, **caractérisé en ce que**
l'enveloppe (30) a une paroi (37) frontale qui délimite du côté frontal la chambre (40) sous pression et qui forme une tête de cylindre délimitant la chambre (46, 47) de travail du cylindre (35, 36), et la paroi (37) frontale a, d'une part, un canal (57) de liaison, qui peut être fermé par une tête (56) d'une soupape (45) de fermeture prévue, et qui mène à la chambre (46, 47) de travail du cylindre (35, 36) respectif et, d'autre part, une ouverture (55) de sortie de chambre sous pression pouvant, par l'ouverture de la vanne (45) de fermeture, communiquer avec le canal (57) de liaison, cette ouverture (55) de sortie menant à la chambre (40) de pression en entourant le canal (55) de liaison.

2. Dispositif d'obturation pour se protéger de l'explosion suivant la revendication 1, **caractérisé en ce que** la vanne (45) de fermeture est incorporée dans cette paroi (37) frontale.

3. Dispositif d'obturation pour se protéger de l'explosion suivant la revendication 2, **caractérisé en ce que** la tige (25, 26) de piston couplée à la plaque (10) formant tiroir est guidée à coulissement à travers une paroi (31) frontale de l'enveloppe (30), la plaque (10) formant tiroir étant montée à coulissement dans une fente (9) d'un boîtier de tiroir relié rigidement à l'enveloppe (30).

4. Dispositif d'obturation pour se protéger de l'explosion suivant la revendication 3, **caractérisé en ce que** la paroi (31) frontale du côté de la plaque formant tiroir de l'enveloppe (30) a, dans la zone du cylindre (25, 36), une ouverture (50) de sortie qui met en communication une chambre (48, 49) de refoulement du cylindre (35, 36) avec une vanne (51) de mise à l'atmosphère rapide, incorporée également dans la paroi (31) frontale.

5. Dispositif d'obturation pour se protéger de l'explosion suivant l'une des revendications 2 à 4, **caractérisé en ce qu'**il y a dans la chambre (40) sous pression deux cylindres (35, 36) parallèles entre eux et la plaque (10) formant tiroir est couplée dans ses parties latérales à respectivement une tige (25, 26) de piston de ces cylindres dans la chambre (46, 47) de travail desquels le fluide sous pression peut être envoyé en passant par une soupape (45) commune de fermeture et par un canal (57) de liaison en dérivation.

6. Dispositif d'obturation pour se protéger de l'explosion suivant l'une des revendications 1 à 5, **caractérisé en ce que** la plaque (10) formant tiroir est constituée d'une plaque perforée formant tiroir qui a une ouverture (20) de passage dégagée ainsi qu'une partie (21) de fermeture.

7. Dispositif d'obturation pour se protéger de l'explosion suivant la revendication 6, **caractérisé en ce qu'**il est fixé sur le boîtier (7) du tiroir, respectivement, une partie (2, 3) de bride dont les ouvertures (12, 13) de passage forment, ensemble avec l'ouverture (20) de passage de la plaque (10) formant tiroir, le passage (4) de la conduite, un élément (14, 15) annulaire d'étanchéité étant inséré du côté frontal dans les parties (2, 3) de bride et ayant une bague (16, 17) d'étanchéité entourant l'ouverture (12, 13) de passage et formant un guidage pour la plaque (10) formant tiroir, bague qui est munie d'un matériau ayant de bonnes propriétés de glissement.

8. Dispositif d'obturation pour se protéger de l'explosion suivant l'une des revendications 3 à 7, **caractérisé en ce que** dans le boîtier (7) du tiroir, est guidée du côté de l'extrémité, en étant mobile dans la direction de coulissement de la plaque (10) formant tiroir, une plinthe (73) s'étendant sur la largeur de la plaque formant tiroir, au moins une pièce (74) en élastomère étant insérée d'une manière lâche avec présence d'espaces (75) intermédiaires entre la plinthe (73) et l'embout (70).

9. Dispositif d'obturation pour se protéger de l'explosion suivant l'une des revendications 2 à 8, **caractérisé en ce qu'**une partie de la soupape (45) de fermeture, ainsi que d'autres éléments (60) de commande sont disposés, pour la commande du mouvement des pistons ou de la plaque formant tiroir, à l'extérieur de l'enveloppe (30) sur la paroi (37) frontale formant la tête du cylindre et sont encapsulés par une coiffe (61) pouvant coiffer l'enveloppe (30) .
